# EUROPEAN PATENT APPLICATION

(11) **EP 4 527 864 A1**
(43) Date of publication of application: **26.03.2025**
(21) Application number: 23807655.8
(22) Date of filing: 16.05.2023
(51) Int. Cl.: C08F 222/30, C08F 2/40

(54) **RESIN COMPOSITION, CURED PRODUCT, LAMINATE, AND METHOD FOR PRODUCING LAMINATE**

(30) Priority: 20.05.2022 JP 2022083352
(71) Applicant: Kuraray Co., Ltd., Kurashiki-shi, Okayama 710-0801 (JP)
(72) Inventor: INATOMI Atsushi, Tsukuba-shi, Ibaraki 305-0841 (JP); NAKAHARA Atsuhiro, Tsukuba-shi, Ibaraki 305-0841 (JP)
(74) Representative: Müller-Boré & Partner Patentanwälte PartG mbB
(86) International application number: PCT/JP2023/018356
(87) International publication number: WO 2023/224054

(57) **Abstract**

A resin composition capable of providing an adhesive excellent in heat resistance and moisture resistance, and a cured product using the same are provided. Further, a laminate using the cured product and a method for producing the laminate are provided.

A resin composition including: 1,1-dicyanoethylene (A) and a polymerizable monomer (B) represented by general formula (I) below,
in which a content of the 1,1-dicyanoethylene (A) is 2.0 to 99.9% by mass in a total of the 1,1-dicyanoethylene (A) and the polymerizable monomer (B):

CHR¹=CR²R³ (I)

## Description

### Technical Field

The present invention relates to a resin composition containing 1,1-dicyanoethylene and a specific polymerizable monomer, a cured product, a laminate, and a method for producing the laminate.

### Background Art

In fast-curing adhesive applications, 2-cyanoacrylic acid alkyl ester, which undergoes anionic polymerization even with a weak Lewis basic compound such as water and alcohol, is used as a main raw material. In the above applications, it is required to have heat resistance and moisture resistance in addition to the adhesive strength, and for example, PTL 1 and PTL 2 propose adhesives to which heat resistance and moisture resistance are imparted by adding various additives.

### Citation List

### Patent Literature

PTL 1: JPS52-78933A
PTL 2: WO2016/133166

### Summary of Invention

### Technical Problem

The heat resistance and moisture resistance of the adhesives described in PTL 1 and PTL 2 are improved as compared to conventional adhesives but are not sufficient. Therefore, further improvement is needed.

An object of the present invention is to provide a resin composition capable of providing an adhesive excellent in heat resistance and moisture resistance, and a cured product using the same. Further, another object is to provide a laminate using the cured product and a method for producing the laminate.

### Solution to Problem

As a result of studies, the present inventors have found that 2-cyanoacrylic acid alkyl ester having high reactivity has a property that is difficult to be copolymerized with other monomers, but is easily copolymerized with 1,1-dicyanoethylene. As a result of further studies based on this finding, it has been found that a cured product obtained from a resin composition containing 1,1-dicyanoethylene and a polymerizable monomer having a specific structure at a specific ratio is excellent not only in adhesiveness but also in heat resistance and moisture resistance, and the present invention has been completed.

That is, the present invention provides the following [1] to [6].
[1] A resin composition including: 1,1-dicyanoethylene (A) and a polymerizable monomer (B) represented by general formula (I) below,
   in which a content of the 1,1-dicyanoethylene (A) is 2.0 to 99.9% by mass in a total of the 1,1-dicyanoethylene (A) and the polymerizable monomer (B):

      CHR¹=CR²R³ (I)
   in which, in the general formula (I), R¹ represents one or more kinds selected from a hydrogen atom, an alkyl group, an alkenyl group, and an alkoxy group,
   R² represents one or more kinds represented by a cyano group, a carboxy group, an ester group represented by -COOR⁴, in which R⁴ represents an alkyl group having 1 to 10 carbon atoms or an aryl group having 6 to 20 carbon atoms, and an acid anhydride group, and
   R³ represents one or more kinds selected from a carboxy group, an ester group represented by -COOR⁵, in which R⁵ represents an alkyl group having 1 to 10 carbon atoms, an aryl group having 6 to 20 carbon atoms, or a divalent or higher-valent linking group, and an acid anhydride group.
[2] The resin composition according to the [1], in which the polymerizable monomer (B) is one or more kinds selected from 2-cyanoacrylic acid alkyl ester, 2-cyanopentadienoic acid alkyl ester, and methylidenemalonic acid dialkyl ester.
[3] The resin composition according to the [1] or [2], further including a Bronsted acidic compound.
[4] A cured product obtained by curing the resin composition according to any of the [1] to [3] with a Lewis basic compound.
[5] A laminate including a layer containing the cured product according to the [4].
[6] A method for producing a laminate, the method including a bonding step of bonding a first adherend body and a second adherend body with the resin composition according to any of the [1] to [3].

### Advantageous Effects of Invention

According to the present invention, it is possible to provide a resin composition capable of providing an adhesive having excellent heat resistance and moisture resistance, and a cured product using the same. In addition, a laminate using the cured product and a method for producing the laminate can be provided.

### Description of Embodiments

### [Resin Composition]

The resin composition of the present invention is a resin composition containing 1,1-dicyanoethylene (A) and a polymerizable monomer (B) represented by the following general formula (I),
in which a content of the 1,1-dicyanoethylene (A) is 2.0 to 99.9% by mass in a total of the 1,1-dicyanoethylene (A) and the polymerizable monomer (B):

   CHR¹=CR²R³ (I)

   (In the general formula (I), R¹ represents one or more kinds selected from a hydrogen atom, an alkyl group, an alkenyl group, and an alkoxy group,
R² represents one or more kinds represented by a cyano group, a carboxy group, an ester group represented by -COOR⁴ (R⁴ represents an alkyl group having 1 to 10 carbon atoms or an aryl group having 6 to 20 carbon atoms), and an acid anhydride group, and
R³ represents one or more kinds selected from a carboxy group, an ester group represented by -COOR⁵ (R⁵ represents an alkyl group having 1 to 10 carbon atoms, an aryl group having 6 to 20 carbon atoms, or a divalent or higher-valent linking group), and an acid anhydride group.)

### <1,1-Dicyanoethylene (A)>

In the resin composition of the present invention, 1,1-dicyanoethylene (A) is used. Since 1,1-dicyanoethylene (A) is excellent in reactivity, it is preferable as a raw material for a fast-curing adhesive, and by using it in combination with a polymerizable monomer (B) described later, a resin composition for an adhesive excellent in heat resistance and moisture resistance can be obtained.

1,1-dicyanoethylene can be obtained by a production method described in J. Am. Chem. Soc., 1989, 111, 9078-9081, or US2,476,270B.

### <Polymerizable Monomer (B)>

The polymerizable monomer (B) is a monomer represented by the following general formula (I):

CHR¹=CR²R³ (I)

In the general formula (I), R¹ represents one or more kinds selected from a hydrogen atom, an alkyl group, an alkenyl group, and an alkoxy group.

The alkyl group of R¹ is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The alkenyl group of R¹ is preferably an alkenyl group having 2 to 12 carbon atoms, and examples thereof include a vinyl group, an allyl group, a propenyl group, an isopropenyl group, a butenyl group, an isobutenyl group, a pentenyl group, a prenyl group, a hexenyl group (such as a cis-3-hexenyl group), and a cyclohexenyl group.

The alkoxy group of R¹ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

Among these, R¹ is preferably a hydrogen atom, an alkyl group, or an alkenyl group, and more preferably a hydrogen atom.

In the general formula (I), R² represents one or more kinds represented by a cyano group, a carboxy group, an ester group represented by -COOR⁴ (R⁴ represents an alkyl group having 1 to 10 carbon atoms or an aryl group having 6 to 20 carbon atoms), and an acid anhydride group.

R² can be an ester group represented by -COOR⁴, and in this case, R⁴ represents an alkyl group having 1 to 10 carbon atoms or an aryl group having 6 to 20 carbon atoms.

Examples of the alkyl group having 1 to 10 carbon atoms of R⁴ include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

Examples of the aryl group having 6 to 20 carbon atoms of R⁴ include a phenyl group, a tolyl group, a xylyl group, and a naphthyl group.

R² can be an acid anhydride group, and examples thereof include an acid anhydride group derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

Among these, R² is preferably a cyano group, a carboxy group, and -COOR⁴ (R⁴ represents an alkyl group having 1 to 10 carbon atoms or an aryl group having 6 to 20 carbon atoms), and more preferably a cyano group.

R³ represents one or more kinds selected from a carboxy group, an ester group represented by -COOR⁵ (R⁵ represents an alkyl group having 1 to 10 carbon atoms, an aryl group having 6 to 20 carbon atoms, or a divalent or higher-valent linking group), and an acid anhydride group.

When R³ is -COOR⁵, R⁵ represents an alkyl group having 1 to 10 carbon atoms, an aryl group having 6 to 20 carbon atoms, or a divalent or higher-valent linking group.

Examples of the alkyl group having 1 to 10 carbon atoms of R⁵ include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

Examples of the aryl group having 6 to 20 carbon atoms of R⁵ include a phenyl group, a tolyl group, a xylyl group, and a naphthyl group.

Examples of the divalent or higher-valent linking group of R⁵ include a linking group derived from a dihydric or higher polyhydric alcohol such as ethylene glycol and glycerin. Specific examples of the compound in the case where R⁵ is a divalent or higher-valent linking group include a compound obtained by esterifying ethylene glycol with two 2-cyanoacrylic acids (so-called "bifunctional cyanoacrylate") and a compound obtained by esterifying glycerin with three 2-cyanoacrylic acids (so-called "trifunctional cyanoacrylate").

Examples of the compound constituting the linking group include diols such as ethylene glycol, 1,3-propanediol, 1,2-butanediol, 1,4-butanediol, 1,6-hexanediol, 1,8-octanediol, 1,9-nonanediol, 1,10-decanediol, and 1,12-dodecanediol; and trihydric or higher polyhydric alcohols such as glycerin, pentaerythritol, trimethylolpropane, and sorbitol.

In the present invention, from the viewpoint of easy availability, the divalent or higher valent linking group is preferably a divalent or trivalent linking group.

R³ can be an acid anhydride group, and examples thereof include an acid anhydride group derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

From the viewpoint of improving adhesiveness, R³ is preferably a carboxy group and an ester group represented by -COOR⁵ (R⁵ represents an alkyl group having 1 to 10 carbon atoms, an aryl group having 6 to 20 carbon atoms, or a divalent or higher valent linking group), and is more preferably an ester group represented by -COOR⁵ (in this case, R⁵ represents an alkyl group having 1 to 6 carbon atoms or a divalent or trivalent linking group).

The polymerizable monomer (B) is preferably one or more kinds selected from 2-cyanoacrylic acid alkyl ester, 2-cyanopentadienoic acid alkyl ester, and methylidenemalonic acid dialkyl ester, and more preferably ethyl 2-cyanoacrylate, from the viewpoint of improving the adhesive strength when the resin composition is used as an adhesive.

The method for producing the polymerizable monomer (B) is not particularly limited, and it can be produced by a known method alone or in combination. In addition, as the polymerizable monomer (B), a commercially available product can be used, and examples thereof include ethyl 2-cyanoacrylate (manufactured by Sigma-Aldrich Japan K.K.).

### <Content of Each Component>

In the resin composition of the present invention, a content of the 1,1-dicyanoethylene (A) is 2.0 to 99.9% by mass in a total of the 1,1-dicyanoethylene (A) and the polymerizable monomer (B). When the content of 1,1-dicyanoethylene (A) is equal to or more than the above lower limit value, the heat resistance and moisture resistance of the cured product obtained from the resin composition are improved. On the other hand, when the content of 1,1-dicyanoethylene (A) is equal to or less than the above upper limit value, the fast curability of the resin composition is improved.

From the above viewpoint, the content of the 1,1-dicyanoethylene (A) is preferably 7.0 to 99.9% by mass, more preferably 30.0 to 99.9% by mass, further more preferably 50.0 to 99.9% by mass, and still further more preferably 70.0 to 99.9% by mass, in the total of the 1,1-dicyanoethylene (A) and the polymerizable monomer (B).

Further, the content of the polymerizable monomer (B) is preferably 0.1 to 93.0% by mass, more preferably 0.1 to 70.0% by mass, further more preferably 0.1 to 50.0% by mass, and still further more preferably 0.1 to 30.0% by mass, in the total of 1,1-dicyanoethylene (A) and the polymerizable monomer (B).

The total content of 1,1-dicyanoethylene (A) and the polymerizable monomer (B) in the resin composition of the present invention is not particularly limited, but is preferably 80% by mass or more, more preferably 90% by mass or more, further more preferably 95% by mass or more, and still further more preferably substantially 100% by mass.

### <Bronsted Acidic Compound>

The resin composition of the present invention preferably further contains a Bronsted acidic compound. When the resin composition of the present invention contains a Bronsted acidic compound, the reactivity of 1,1-dicyanoethylene (A) can be controlled and the storage stability of the resin composition is improved. More specifically, since 1,1-dicyanoethylene (A) is cured by a trace amount of water, it is preferable to completely remove water in the production process. However, since it is practically difficult to completely remove water, it is preferable to suppress curing (suppress the initiation of polymerization) by protonating water using a Bronsted acid.

From the viewpoint of storage stability and easy availability, examples of the Bronsted acidic compound that can be used in the present invention include inorganic acid, carboxylic acid, and organic sulfonic acid. Among these, one or more kinds selected from sulfuric acid, hydrochloric acid, nitric acid, acetic acid, benzenesulfonic acid, p-toluenesulfonic acid, and methanesulfonic acid are preferable, and a compound that reacts with water to produce a compound exhibiting Bronsted acidity, such as sulfur dioxide or diphosphorus pentoxide, can also be used.

When the resin composition of the present invention contains a Bronsted acidic compound, the content thereof is preferably 0.0001 to 2.0% by mass, more preferably 0.001 to 1.0% by mass, and further more preferably 0.001 to 0.05% by mass, in the total amount of the resin composition. When the content of the Bronsted acidic compound is within the above range, storage stability is good, and high tensile shear adhesive strength is obtained.

From the viewpoint of storage stability, the content of the 1,1-dicyanoethylene (A) in the total amount of the resin composition is preferably 80% by mass or less, more preferably 50% by mass or less, further more preferably 30% by mass or less, and still further more preferably 10% by mass or less.

### <Other Components>

The resin composition of the present invention can further contain other components such as a solvent, a filler, a thickener, an anti-aging agent, a plasticizer, a flame retardant, a stabilizer, and an antioxidant, in addition to the respective components.

When the resin composition of the present invention contains other components, the content thereof is preferably 0.001% by mass or more, and is preferably 10% by mass or less, and more preferably 3% by mass or less, in the total amount of the resin composition.

### <Method for Producing Resin Composition>

The method for producing the resin composition of the present invention is not particularly limited, and for example, it can be produced by a production method including a mixing step of mixing 1,1-dicyanoethylene (A), the polymerizable monomer (B), and if necessary, other components, but is preferably produced in a dry atmosphere because the polymerization reaction proceeds due to water in the air when mixed in the air. Note that the method for mixing the respective components is not particularly limited, and the components can be mixed by a known method.

### [Cured Product]

The cured product of the present invention is obtained by curing the above resin composition of the present invention with a Lewis basic compound, and more specifically, is a copolymer obtained by copolymerizing respective components in the resin composition using a Lewis basic compound as a catalyst.

<Lewis Basic Compound>

The Lewis basic compound used in the present invention is not particularly limited, and for example, one or more kinds selected from water, alcohol and alkylamine can be used, and examples of the alcohol include methanol, ethanol and propanol.

Examples of the alkylamine include tertiary amine such as trimethylamine, triethylamine, tripropylamine, triisopropylamine, N,N-dimethylethylamine, N,N-dimethylpropylamine, and N,N-dimethylisopropylamine.

### <Method for Producing Cured Product>

The method for producing the cured product is not particularly limited, and it can be obtained by mixing the resin composition of the present invention and the Lewis basic compound at room temperature (23°C). However, in general, the cured product can be obtained by a reaction between the resin composition of the present invention and water (Lewis basic compound) in the air.

The amount of the Lewis basic compound is not particularly limited, but is preferably from 0.001 to 1.0 parts by mass, and more preferably from 0.01 to 0.5 parts by mass, with respect to 100 parts by mass of the resin composition. When the content of the Lewis basic compound is within the above range, the resin composition rapidly reacts.

### [Laminate and Method for Producing the Same]

The laminate of the present invention is a laminate having a layer containing the cured product, and the laminate structure is not particularly limited, but it is preferable to have the cured product between two adherend bodies. By having the cured product between two adherend bodies, the adherend bodies can be firmly bonded to each other.

The adherend body used in the laminate of the present invention is not particularly limited, and examples thereof include a synthetic resin, a metal, a ceramic, and a fabric.

Examples of the synthetic resin include a polyolefin resin such as a copolymer of polyethylene, polypropylene, or ethylene, and one or more kinds of α-olefin having 3 to 20 carbon atoms (for example, propylene, 1-butene, 1-pentene, and 1-hexene), an ethylenepropylene-diene copolymer (EPDM), an ethylene-vinyl acetate copolymer, and an ethylene-acrylic acid copolymer, a polyurethane resin, a polyamide resin, a polyester resin, and a polycarbonate resin.

Examples of the metal include a steel plate such as a stainless steel plate, a cold-rolled steel plate, and a galvanized steel plate.

The thickness of the adherend body constituting the laminate is not particularly limited. On the other hand, the thickness of the layer containing the cured product is preferably 0.01 to 2.0 mm, more preferably 0.015 to 1.5 mm, and further more preferably 0.02 to 1.2 mm, from the viewpoint of firmly bonding adherend bodies to each other.

The method for producing the laminate is not particularly limited, but it is preferably produced by the method for producing the laminate of the present invention including a bonding step of bonding a first adherend body and a second adherend body with the resin composition.

The method for bonding the first adherend body and the second adherend body with the resin composition is not particularly limited, but for example, they can be bonded by applying the resin composition to one adherend body, superposing the other adherend body thereon, and curing.

The method for applying the resin composition to the adherend body is not particularly limited, and examples thereof include a spin coating method, a spray coating method, a bar coating method, a knife coating method, a roll coating method, a roll knife coating method, a blade coating method, a die coating method, and a gravure coating method.

The application amount of the resin composition to the adherend body is not particularly limited, but is preferably 0.01 to 3.0 µL/mm², more preferably 0.05 to 2.5 µL/mm², and further more preferably 0.1 to 2.0 µL/mm². When the application amount is equal to or more than the above lower limit value, adherend bodies can be firmly bonded to each other. On the other hand, when the application amount is equal to or less than the above upper limit value, both can be adhered in an appropriate amount.

### Example

Hereinafter, the present invention is described in detail with reference to Examples, but the present invention is not limited to these Examples.

The compounds used in Examples and Comparative Examples are as follows.

### <1,1-Dicyanoethylene (A)>

### 1,1-dicyanoethylene

### <Polymerizable Monomer (B)>

Ethyl 2-cyanoacrylate (manufactured by Sigma-Aldrich Japan K.K.)
Butyl 2-cyanoacrylate (manufactured by United States Biological)
Diethyl methylidenemalonate (manufactured by FUJIFILM Wako Pure Chemical Corporation)

### <Bronsted Acidic Compound>

### Methanesulfonic acid

### <Materials for Laminate>

### · Steel plate (manufactured by Standard Test Piece, length of 25 mm, width of 100 mm, thickness of 1.6 mm)

### <Example 1>

Under dry nitrogen gas, 0.02 g of 1,1-dicyanoethylene (A) and 0.98 g of ethyl 2-cyanoacrylate (polymerizable monomer (B)) were mixed. Further, a Bronsted acidic compound (methanesulfonic acid) was added to the mixture so that the content thereof was 0.01% by mass in the total amount of the resin composition to prepare a resin composition. This resin composition was evaluated according to JIS K6861:1995. Specifically, 100 µL of the obtained resin composition was applied to a range of 12.5 mm × 25 mm of the steel plate, and another steel plate was superposed on the applied surface. Thereafter, the two steel plates were allowed to stand at room temperature (23°C) and under a humidity of 50% RH for 1 day to cure the resin composition by mixing water as the Lewis basic compound, thereby bonding them to obtain a laminate. Next, the tensile shear adhesive strength of each laminate was measured for each of the following conditions. The results are shown in Table 1.

### <Normal State Adhesion Test>

The tensile shear adhesive strength of the laminate was measured at 25% RH and 25°C at a tensile speed of 20 mm/min using a universal material tester Type: 5969 (manufactured by Instron).

### <Heat Resistant Adhesion Test>

The laminate was allowed to stand in a thermo-hygrostat at 25% RH and 120°C for 3 days, and then the tensile shear adhesive strength of the laminate was measured at 25% RH and 25°C at a tensile speed of 20 mm/min using a universal material tester Type: 5969 (manufactured by Instron).

### <Moisture Resistant Adhesion Test>

The laminate was allowed to stand in a thermo-hygrostat at 90% RH and 40°C for 1 day, and then the tensile shear adhesive strength of the laminate was measured at 25% RH and 25°C at a tensile speed of 20 mm/min using a universal material tester Type: 5969 (manufactured by Instron).

### <Method for Evaluating Storage Stability>

The resin compositions prepared according to the formulation described in Examples and Comparative Examples were allowed to stand in a test environment at a temperature of 50°C and a humidity of 50% for 3 hours, and the storage stability was evaluated by confirming the presence or absence of generation of precipitate.

### <Examples 2 to 16 and Comparative Examples 1 to 4>

Laminates were prepared in the same manner as in Example 1 except that the resin compositions were prepared according to the formulation described in Tables 1 to 3, and similarly, the tensile shear adhesive strength was measured. The results are shown in Tables 1 to 3.

### <Examples 17 to 22>

The resin compositions prepared according to the formulation described in Table 4 was allowed to stand in a test environment at a temperature of 50°C and a humidity of 50% for 3 hours, and the presence or absence of generation of a precipitate when water in the air was mixed was evaluated. The results are shown in Table 4.

**Table 1**

| | | | Examples | | | | | | | |
|---|---|---|---|---|---|---|---|---|---|---|
| | | | 1 | 2 | 3 | 4 | 5 | 6 | 7 | 8 |
| Formulation (Part(s) by Mass) | (A) | 1,1-Dicyanoethylene | 2 | 5 | 8 | 10 | 50 | 90 | 99 | 99.9 |
| | (B) | Ethyl 2-Cyanoacrylate | 98 | 95 | 92 | 90 | 50 | 10 | 1 | 0.1 |
| | | Butyl 2-Cyanoacrylate | - | - | - | - | - | - | - | - |
| | | Diethyl Methylidenemalonate | - | - | - | - | - | - | - | - |
| Content of (A) in Total of (A) and (B) [% by Mass] | | | 2.0 | 5.0 | 8.0 | 10.0 | 50.0 | 90.0 | 99.0 | 99.9 |
| Bronsted Acidic Compound (% by Mass)*1 | Methanesulfonic Acid | | 0.01 | 0.01 | 0.01 | 0.01 | 0.01 | 0.01 | 0.01 | 0.01 |
| Evaluation | Tensile Shear Adhesive Strength [MPa] in Normal State | | 8.9 | 8.8 | 8.6 | 8.5 | 8.5 | 8.9 | 9.0 | 9.5 |
| | Tensile Shear Adhesive Strength [MPa] After Heat Resistant Condition | | 1.25 | 2.86 | 3.22 | 3.89 | 4.05 | 5.15 | 5.05 | 6.27 |
| | Tensile Shear Adhesive Strength [MPa] After Moisture Resistant Condition | | 1.81 | 1.78 | 2.24 | 2.52 | 3.52 | 4.00 | 6.92 | 4.07 |

| | | | | | | | | | | |
|---|---|---|---|---|---|---|---|---|---|---|
| *1: Content of Bronsted Acidic Compound in Resin Composition | | | | | | | | | | |

**Table 2**

| | | | Examples | | | | | | | |
|---|---|---|---|---|---|---|---|---|---|---|
| | | | 9 | 10 | 11 | 12 | 13 | 14 | 15 | 16 |
| Formulation (Part(s) by Mass) | (A) | 1,1-Dicyanoethylene | 2 | 2 | 99.9 | 99.9 | 50 | 50 | 90 | 90 |
| | (B) | Ethyl 2-Cyanoacrylate | 98 | 98 | 0.1 | 0.1 | - | - | - | - |
| | | Butyl 2-Cyanoacrylate | - | - | - | - | 50 | - | 10 | - |
| | | Diethyl Methylidenemalonate | - | - | - | - | - | 50 | - | 10 |
| Content of (A) in Total of (A) and (B) [% by Mass] | | | 2.0 | 2.0 | 99.9 | 99.9 | 50.0 | 50.0 | 90.0 | 90.0 |
| Bronsted Acidic Compound (% by Mass)*1 | Methanesulfonic Acid | | 0.001 | 1.0 | 0.001 | 1.0 | 0.01 | 0.01 | 0.001 | 0.001 |
| Evaluation | Tensile Shear Adhesive Strength [MPa] in Normal State | | 10 | 8.3 | 11.0 | 8.9 | 7.5 | 5.8 | 8.4 | 8.0 |
| | Tensile Shear Adhesive Strength [MPa] After Heat Resistant Condition | | 1.52 | 1.20 | 6.69 | 6.10 | 3.74 | 2.45 | 5.00 | 4.55 |
| | Tensile Shear Adhesive Strength [MPa] After Moisture Resistant Condition | | 1.90 | 1.76 | 4.52 | 3.83 | 3.50 | 2.20 | 3.95 | 3.22 |

| | | | | | | | | | | |
|---|---|---|---|---|---|---|---|---|---|---|
| *1: Content of Bronsted Acidic Compound in Resin Composition | | | | | | | | | | |

**Table 3**

| | | | Comparative Examples | | | |
|---|---|---|---|---|---|---|
| | | | 1 | 2 | 3 | 4 |
| Formulation (Part(s) by Mass) | (A) | 1,1-Dicyanoethylene | - | 1 | - | - |
| | (B) | Ethyl 2-Cyanoacrylate | 100 | 99 | - | - |
| | | Butyl 2-Cyanoacrylate | - | - | 100 | - |
| | | Diethyl Methylidenemalonate | - | - | - | 100 |
| Content of (A) in Total of (A) and (B) [% by Mass] | | | 0.0 | 1.0 | 0.0 | 0.0 |
| Bronsted Acidic Compound (% by Mass)*1 | Methanesulfonic Acid | | 0.01 | 0.01 | 0.01 | 0.01 |
| Evaluation | Tensile Shear Adhesive Strength [MPa] in Normal State | | 8.8 | 8.9 | 7.4 | Not Cured |
| | Tensile Shear Adhesive Strength [MPa] After Heat Resistant Condition | | 0.81 | 0.80 | 0.66 | Not Cured |
| | Tensile Shear Adhesive Strength [MPa] After Moisture Resistant Condition | | 1.61 | 1.66 | 1.70 | Not Cured |

| | | | | | | |
|---|---|---|---|---|---|---|
| *1: Content of Bronsted Acidic Compound in Resin Composition | | | | | | |

**Table 4**

| | | | Examples | | | | | |
|---|---|---|---|---|---|---|---|---|
| | | | 17 | 18 | 19 | 20 | 21 | 22 |
| Formulation (Part(s) by Mass) | (A) | 1,1-Dicyanoethylene | 99.9 | 99.9 | 99.9 | 5 | 99.9 | 5 |
| | (B) | Ethyl 2-Cyanoacrylate | 0.1 | 0.1 | 0.1 | 95 | 0.1 | 95 |
| Bronsted Acidic Compound (% by Mass) | | Methanesulfonic Acid | 1.0 | 0.1 | 0.001 | 0.1 | - | - |
| Evaluation | Presence or Absence of Precipitate After Evaluation of Storage Stability | | Absent | Absent | Absent | Absent | Present | Present |

As is clear from the results shown in Table 1, it is found that the resin composition of the present invention exhibits excellent heat resistance and moisture resistance when used as an adhesive.

Further, from the results of Table 4, it is found that the resin composition of the present invention is also excellent in storage stability.

## Claims

1. A resin composition comprising: 1,1-dicyanoethylene (A) and a polymerizable monomer (B) represented by general formula (I) below,
wherein a content of the 1,1-dicyanoethylene (A) is 2.0 to 99.9% by mass in a total of the 1,1-dicyanoethylene (A) and the polymerizable monomer (B):
CHR¹=CR²R³ (I)
wherein, in the general formula (I), R¹ represents one or more kinds selected from a hydrogen atom, an alkyl group, an alkenyl group, and an alkoxy group,
R² represents one or more kinds represented by a cyano group, a carboxy group, an ester group represented by -COOR⁴, in which R⁴ represents an alkyl group having 1 to 10 carbon atoms or an aryl group having 6 to 20 carbon atoms, and an acid anhydride group, and
R³ represents one or more kinds selected from a carboxy group, an ester group represented by -COOR⁵, in which R⁵ represents an alkyl group having 1 to 10 carbon atoms, an aryl group having 6 to 20 carbon atoms, or a divalent or higher-valent linking group, and an acid anhydride group.

2. The resin composition according to Claim 1, wherein the polymerizable monomer (B) is one or more kinds selected from 2-cyanoacrylic acid alkyl ester, 2-cyanopentadienoic acid alkyl ester, and methylidenemalonic acid dialkyl ester.

3. The resin composition according to Claim 1 or 2, further comprising a Bronsted acidic compound.

4. A cured product obtained by curing the resin composition according to any one of Claims 1 to 3 with a Lewis basic compound.

5. A laminate comprising a layer containing the cured product according to Claim 4.

6. A method for producing a laminate, the method comprising a bonding step of bonding a first adherend body and a second adherend body with the resin composition according to any one of Claims 1 to 3.
